# EUROPÄISCHE PATENTANMELDUNG

(11) **EP 2 388 502 A2**
(43) Veröffentlichungstag der Anmeldung: **23.11.2011**
(21) Anmeldenummer: 11166757.2
(22) Anmeldetag: 19.05.2011
(51) Int. Cl.: F16L 35/00

(54) **Fluidschlauchunterstützungselement**

(30) Priorität: 21.05.2010 DE 202010005482 U
(71) Anmelder: Niederthanner, Martin, 87665 Mauerstetten (DE)
(72) Erfinder: Niederthanner, Martin, 87665 Mauerstetten (DE)
(74) Vertreter: Pfister, Stefan Helmut Ulrich

(57) **Zusammenfassung**

Die Erfindung betrifft ein Fluidschlauchunterstützungselement, gebildet aus einer den Fluidschlauch umschließenden in sich formhaltigen Hülse mit veränderbarem Durchmesser, die als Spritzgussformteil ausgebildet ist. Des Weiteren betrifft die Erfindung einen mit dem Fluidschlauchunterstützungselement ausgestatteten Fluidschlauch sowie ein Verstärkungs- und oder Markierungsset für einen Fluidschlauch, welches das Fluidschlauchunterstützungselement umfasst.

## Beschreibung

Die Erfindung betrifft ein Fluidschlauchunterstützungselement, einen mit einem derartigen Element ausgerüsteten Fluidschlauch und ein Verstärkungs- und Markierungsset für einen Fluidschlauch.

Insbesondere mit Hydraulikantrieb versehene Vorrichtungen, beispielsweise in der Land- und Kommunaltechnik sowie im Bauwesen weisen eine Vielzahl von Hydraulikschlauchleitungen auf, die entsprechende Fluide an die Abnehmer weiterleiten. Derartige Fluidschläuche (aber auch Pneumatik-, Wasser-, Druckluft-oder Gasleitungen beziehungsweise Schläuche) unterliegen zum einen einer hohen Beanspruchung, zum anderen bedarf es, um hochkomplexe Steuerungen moderner Anbaugeräte an den Grundgeräten sicherzustellen, einer genauen, durch die Hersteller vorgegebenen oder den Anwender festgelegten Anbindung der Geräte an definierte Anordnungspunkte am Antriebsaggregat.

Derzeit werden hier Markierungen, beispielsweise in Form von Anhängern, Kappen oder Beschriftungen der einzelnen Leitungen vorgesehen. Zur Markierung von Fluidschläuchen ist es ferner bekannt, Schrumpfschläuche aufzuziehen, die beispielsweise Informationen tragen oder eine farbliche Ausgestaltung aufweisen, und die eindeutige Zuordnung der entsprechenden Fluidschläuche oder -leitungen ermöglichen sollen. Vorgenannte Markierungen weisen den Nachteil auf, dass diese verloren gehen, verschmutzen oder im Laufe der Benutzung von Hydraulikschläuche beziehungsweise Fluidleitungen verschleißen. Die Leitungen beziehungsweise Schläuche sind dann nicht mehr eindeutig zuordenbar.

Durch das Ankoppeln und/oder Abkoppeln der Fluidleitungen an Versorgungsaggregate kommt es zudem zu einer starken mechanischen Beanspruchung der vorderen Leitungsteile beziehungsweise Schlauchmäntel und Anschlussarmaturen, was zusätzlich mit Materialermüdung und Defekten einhergeht.

Nachteilig an oben genannten Markierungen ist, dass diese zum Teil nur eine geringe Materialstärke aufweisen und somit einem erhöhten Verschleiß unterliegen. Auch wird hier keine Verstärkung der hochbeanspruchten Abschnitte der Fluidschläuche erreicht.

Aufgabe der vorliegenden Erfindung ist es daher, einen Fluidschlauch hinsichtlich Zuordnung und Verschleiß auf einfache Art und Weise zu verbessern.

Diese Aufgabe wird gelöst durch ein Fluidschlauchunterstützungselement gemäß der Erfindung sowie einen mit einem derartigen Element ausgerüsteten Fluidschlauch nach Anspruch 7 und ein Verstärkungs- und Markierungsset gemäß Anspruch 12.

Vorteilhafte Weiterbildungen der Erfindung sind Gegenstand der abhängigen Ansprüche.

Das erfindungsgemäße Fluidschlauchunterstützungselement dient einerseits dazu, den damit ausgestatteten Fluidschlauch mechanisch zu unterstützen. Daneben wird eine Unterstützung des Bedieners dadurch erreicht, dass mit Hilfe des Fluidschlauchunterstützungselementes eine Markierung des Fluidschlauches durchgeführt werden kann, um so die Zuordnung verschiedenster Fluidschläuche zu Anschlüssen an beispielsweise dem Antriebsaggregat einer landwirtschaftlichen Maschine oder dergleichen zu vereinfachen.

Das Fluidschlauchunterstützungselement ist aus einer den Fluidschlauch umschließenden, in sich formhaltigen Hülse mit veränderbarem Duchmesser gebildet. Als Hülse im Sinne der Erfindung zu verstehen ist ein im Wesentlichen zylindrischer Körper, der nach Art eines Rohres ausgebildet den Fluidschlauch umschließt. Die Formhaltigkeit bezieht sich auf die letztendliche Ausgestaltung der Hülse, das heißt diese weist sowohl im vom Fluidschlauch getrennten Zustand wie auch in ihrem den Fluidschlauch umschließenden Zustand im Wesentlichen die gleiche äußere Formgebung auf. Durch die Ausgestaltung mit veränderbarem Durchmesser wird erreicht, dass die Hülse geeignet ist, über einen bestehenden Fluidschlauch und gegebenenfalls daran angeordnete Anschluss- und Armaturenelemente geführt zu werden. Um dies durchzuführen, erfolgt eine zeitweise Aufweitung der Hülse, woraus ein vergrößerter Innendurchmesser resultiert. Nach dem Aufweiten und Überziehen der Hülse über einen Fluidschlauch beziehungsweise über die daran angeordnete Armatur wird die Dehnung und damit die Aufweitung des Innendurchmessers der Hülse zurückgeführt und diese umschließt dann den Fluidschlauch beziehungsweise teilweise auch die Armatur, in Abhängigkeit von der letztendlichen Anordnung des Fluidschlauchunterstützungselementes am Fluidschlauch. Ist ein Aufschrumpfen der Hülse auf den Schlauch vorgesehen, verringert sich der Durchmesser im Verlauf des Schrumpfvorganges.

Die Hülse ist als Spritzgussformteil ausgebildet. Dies hat, neben der besonders einfachen Art der Herstellung der Hülse, den Vorteil, dass hier eine Formgebung im Herstellungsprozess erfolgen und die Hülsenform und die Bemaßung der Hülse vorab festgelegt und für einzelne Fluidschlauchtypen und -dimensionen definiert werden kann. Auch lässt sich in einem Spritzgussverfahren eine Vielzahl von Formteilen in kürzester zeit herstellen, wodurch die Herstellungskosten gesenkt und die einheitliche Qualität der Hülsen sichergestellt werden kann. Durch entsprechende Materialbehandlung beim oder nach dem Spritzgießen, beispielsweise durch Vernetzen von Molekülen, kann eine Einstellung der Schrumpfrate durchgeführt werden. Auch bietet ein Spritzgussverfahren die Möglichkeit eine Vielzahl von verschiedenen Materialien für die Herstellung der Hülse zu verwenden, woraus dann eine noch bessere Anpassung der Hülse an die jeweiligen Einsatzzwecke resultiert.

Die Hülse ist bevorzugt nachträglich an einem Fluidschlauch anbringbar. Dies eröffnet die Möglichkeit, bestehende Fluidleitungen, die beispielsweise mit den eingangs genannten herkömmlichen Markierungsmitteln ausgerüstet waren, nachträglich auf die Fluidschlauchunterstützungselemente gemäß der vorliegenden Erfindung umzurüsten. Auch wenn bisher keine Markierungen an den entsprechenden Leitungen oder Schläuchen vorgesehen waren, kann dies nun, beispielsweise bei Umstellung der Antriebsaggregate durchgeführt und somit eine eindeutige Zuordnung der entsprechenden Fluidleitungen zu den Anschlüssen an einem Antriebsaggregat sichergestellt werden. Die Hülse dient in diesem Zusammenhang zweierlei Zwecken, zum einen wird eine Aussteifung des besonders hoch beanspruchten Anschlussbereichs des Fluidschlauches an das Antriebsaggregat durchgeführt, zum anderen kann über die Hülse eine Markierung der Fluidschläuche durchgeführt werden, wenn die Hülse, wie nachfolgend ausgeführt, eine entsprechend eingeformte, angeformte oder in sonstiger Art und Weise mit der Hülse verbundene Markierung oder eine spezifische Farbgebung aufweist. Die Hülse bietet zum einen einen Knickoder Verschleißschutz für den Fluidschlauch, zum anderen ergibt sich aufgrund der konzentrischen Anordnung der Hülse am Fluidschlauch und aufgrund deren längenmäßiger Ausdehnung eine Art Griffstück. Des Weiteren wird durch die dauerhafte Markierung der Hülse eine eindeutige Zuordnung möglich. Das Fluidschlauchunterstützungselement gemäß der vorliegenden Erfindung bietet somit eine Vielzahl von Vorteilen und eignet sich zur nachträglichen Verbesserung bestehender Maschinen und Geräte, die über Fluidschläuche, zum Beispiel Hydraulik- oder Pneumatikleitungen, verfügen. Die Erfindung bleibt jedoch nicht auf den Bereich der Hydraulik- und Pneumatikleitungen oder -schläuche beschränkt, sondern eignet sich in gleicher Weise auch für die Verwendung mit sonstigen Leitungen oder Schläuchen, beispielsweise mit Wasser-, Gas-oder Druckluftleitungen beziehungsweise -schläuchen.

Günstigerweise liegt die Wandstärke der Hülse bei mindestens 0,1 mm, insbesondere zwischen 0,2 mm und 10 mm, bevorzugt zwischen 1 mm und 8 mm, insbesondere zwischen 2 mm und 5 mm. Hierdurch wird zum einen erreicht, dass die Hülse eine der erhöhten mechanischen Beanspruchung gerechte Wandstärke aufweist, zum anderen wird die Formhaltigkeit der Hülse durch die entsprechende Wandstärke gewährleistet. Daneben sichert eine Wandstärke im oben genannten Bereich die Hülse auch gegen ein Aufreißen, beispielsweise beim Dehnen, um die Hülse über eine Fluidschlaucharmatur oder dergleichen zu ziehen.

Als besonders vorteilhaft erweist es sich, wenn die Hülse aus einem elastomeren Kunststoffmaterial besteht. Aufgrund der Elastizität dieses Materials kann die Hülse problemlos über bereits bestehende Fluidschläuche beziehungsweise zusätzlich über die daran angeordneten Armaturen gezogen werden, nimmt nach Erreichen der letztendlichen Anordnungsposition am Fluidschlauch die ursprüngliche Form wieder ein und umschließt dabei den Fluidschlauch mehr oder weniger spielfrei. Neben den elastomeren Eigenschaften sind die Kunststoffmaterialien günstigerweise auch thermoplastisch und hierbei insbesondere schrumpffähig. So kann, bei Verwendung eines insbesondere schrumpffähigen Kunststoffmaterials, eine mit Übermaß ausgestattete Hülse zur Verfügung gestellt werden, die dann, ohne weitere Dehnung der Hülse über bestehende Fluidschläuche und gegebenenfalls daran angeordnete Armaturen übergezogen werden kann, um nach Temperatur- oder Chemikalienbeaufschlagung in die letztendliche Position am Fluidschlauch geschrumpft zu werden. Auch hierbei bleibt die erfindungsgemäße Ausgestaltung des Fluidschlauchunterstützungselementes erhalten, da nämlich durch den Schrumpfprozess keine Formveränderung der Hülse stattfindet, es wird lediglich deren Durchmesser insgesamt verändert an den Außendurchmesser der Fluidleitung angepasst.

Als Kunststoffmaterial findet hier bevorzugt ein Material auf Polyolefin- oder Fluorelastomerbasis Verwendung. Ebenfalls geeignet als Material ist Polyvinylidenfluorid (PVDF), Polyvinylchlorid (PVD), Polytetrafluorethen (PTFE), Perfluoralkoxy-Polymer (PFA) sowie Mischungen aus den vorgenannten Materialien. Daneben können selbstverständlich alle weiteren Kunststoffmaterialien, die elastomere und/oder thermoplastische und hierbei insbesondere schrumpffähige Eigenschaften aufweisen, verwendet werden, um daraus die Hülse zu bilden, die letztlich zur Unterstützung des Fluidschlauches verwendet wird. Die Hülse kann hierbei insgesamt aus einem der vorgenannten Materialien beziehungsweise aus Mischungen daraus gebildet werden, daneben bietet sich jedoch auch die Möglichkeit, dass die Hülse lediglich elastische oder thermoplastische, insbesondere schrumpffähige Bereiche aufweist. Hierdurch kann dann erreicht werden, dass die Hülse zwar über die entsprechenden Fluidleitungen vollumfänglich übergezogen, jedoch nur bereichsweise auf diese aufgeschrumpft wird. Hierdurch bleibt eine höhere Elastizität der Hülse an der Schlauchleitung erhalten und Zugkräfte, die auf die Hülse beziehungsweise den Schlauch beispielsweise beim Abziehen von einem Antriebsaggregat einwirken, werden teilweise durch die Hülse, die in Bereichen spielfrei oder im Wesentlichen spielfrei am Fluidschlauch angeordnet ist, aufgenommen. Die elastischen oder thermoplastischen, insbesondere schrumpffähigen Bereiche können auch gesondert von der eigentlichen Hülse vorgesehen werden. Diese werden dann auf den Fluidschlauch aufgezogen oder auf diesem angeordnet. Hiernach wird dann die Hülse, die aus einem anderen, beispielsweise nicht elastischen, thermoplastischen oder schrumpffähigen Material gebildet ist, ebenfalls auf den Fluidschlauch angeordnet oder aufgesteckt, schließlich wird ein weiterer Bereich der Gesamthülse, der von den übrigen Teilen getrennt vorgesehen ist, an dem Fluidschlauch beziehungsweise der Armatur angeordnet und hierdurch der mittlere Teil der Hülse fixiert. Die beiden elastischen/thermoplastischen oder schrumpffähigen Begrenzungsbereiche der Hülse können dann gegebenenfalls unlösbar mit dem Fluidschlauch beziehungsweise dem Fluidschlauch und der Armatur oder nur der Armatur verbunden werden und halten gleichzeitig den Hülsenkörper am Anordnungsort.

Eine als vorteilhaft angesehene Ausführungsform des erfindungsgemäßen Fluidschlauchunterstützungselementes sieht vor, dass an der Hülse beziehungsweise an wenigstens einem Ende der Hülse wenigstens eine den Umfang zumindest abschnittsweise umlaufende wulstartige Verdickung, ein Flansch oder ein Ring angeordnet ist. Dieser Flansch, die wulstartige Verdickung oder der Ring kann an die Hülse angeformt oder als davon getrenntes Element vorgesehen werden. Wie bereits oben ausgeführt, dient das gesonderte Element der Hülse, das als Ring, Verdickung oder Flansch ausgebildet ist, dann zur Fixierung des Hülsenkörpers am Fluidschlauch. Durch die Ausgestaltung der Hülse mit wulstartiger Verdickung beziehungsweise mit Flansch oder Ring wird die Charakteristik als Griffstück erreicht, da durch die entsprechenden Verdickungen, Flansche oder Ringe eine verbesserte Handhabbarkeit des Fluidschlauches erreicht wird. Ein Abrutschen des Bedieners beim Anstecken oder Abziehen des Schlauches, beispielsweise von einem Antriebsaggregat, wird verhindert oder erschwert. Darüberhinaus bietet ein den eigentlichen Durchmesser beziehungsweise Umfang der Hülse und damit des Fluidschlauchs überragender Flansch oder Ring auch einen gewissen Schutz für den Bediener beim Anordnen beziehungsweise Abkoppeln der Leitungen von einem Antriebsaggregat. Die wulstartige Verdickung, der Flansch oder der Ring erstrecken sich in der Regel radial nach Außen, das heißt vom Fluidschlauch weg und gestalten somit die Hülse nach Art eines Griffstückes. Neben dieser Ausführungsform besteht selbstverständlich auch die Möglichkeit, dass eine entsprechende Verdickung, ein Flansch oder Ring sich radial nach Innen, das heißt auf die Fluidleitung zu erstreckt. Hierdurch kann erreicht werden, dass die Hülse in entsprechenden Nuten oder Vertiefungen am Fluidschlauch beziehungsweise den Armaturen eingreift und hierdurch in ihrer Position fixiert wird. Selbstverständlich können an dem erfindungsgemäßen Element auch wulstartige Verdickungen, Ringe oder Flansche vorgesehen werden, die sich in beide der genannten Richtungen erstrecken und somit zum einen eine Fixierung am Schlauch sicherstellen und zum anderen eine verbesserte Griffposition der Hülse am Fluidschlauch ermöglichen.

Je nach Einsatzbereich der erfindungsgemäßen Fluidschlauchunterstützungselemente ist der Schrumpfbereich, das heißt die maximale Größenänderung beim Schrumpfen festgelegt. Das Schrumpfverhältnis ist daneben abhängig vom verwendeten Kunst stoff sowie dem Behandlungsverfahren. Bevorzugt weist die Hülse eine Schrumpfrate von zwischen 6:1 und 1,1:1 auf. Insbesondere liegt die Schrumpfrate zwischen 3:1 und 1,5:1. Der Innendurchmesser der Hülse ist hierbei vor der Schrumpfung größer gewählt als der Außendurchmesser des jeweils mit dem Fluidschlauchunterstützungselement auszurüstenden Fluidschlauches beziehungsweise, sofern vorhanden, einer am Fluidschlauch vorgesehenen Armatur. Die Schrumpfrate wird, nach der Herstellung der Hülse, bevorzugt in einem Spritzgussverfahren, das heißt einer Ausgestaltung der Hülse als Spritzgussformteil beispielsweise durch entsprechende Vernetzung der Molekülketten des Kunststoffmateriales eingestellt und/oder die Hülse durch Aufweiten in einem erwärmten Zustand auf die vor dem Schrumpfen vorgesehene Dimension gebracht, sodass ein Überziehen über den Fluidschlauch beziehungsweise die Armatur problemlos möglich ist. Nach dem Anordnen der Hülse in der letztendlichen Position am Fluidschlauch dann, beispielsweise durch Hitzeeinwirkung oder durch chemische Behandlung der Hülse eine Schrumpfung und somit nahezu spielfrei Anordnung am Fluidschlauch durchgeführt wird. Daneben kann aber auch bereits das Ausgangsmaterial der Hülse entsprechend gewählt werden, dass hier keine weitere Nachbehandlung des Spritzgussformteils mehr notwendig ist und sich die gebildete Hülse direkt zum Schrumpfen eignet.

Neben der Ausführung des Fluidschlauchunterstützungselementes aus einem schrumpffähigen, thermoplastischen Kunststoffmaterial besteht auch die Möglichkeit, wie vorher beschrieben, dass die Hülse aus einem elastischen Material besteht und die Hülse dann bevorzugt einen Innendurchmesser aufweist, der kleiner oder gleich dem Außendurchmesser des Fluidschlauches und/oder einer am Fluidschlauch vorgesehenen Armatur ist, die Hülse durch zeitweises Aufweiten und damit Erhöhen des Innendurchmessers über den Fluidschlauch und gegebenenfalls die Armatur überziehbar und hernach, das heißt nach Rückkehr in die Ausgangsform spielfrei am Fluidschlauch angeordnet ist. Durch das Aufweiten der Hülse während dem Anordnungsvorgang erfolgt hier somit eine elastische Verformung der Hülse, die jedoch vollständig reversibel ist, sodass ein zufriedenstellendes Umschließen, Stabilisieren und Markieren des entsprechenden Fluidschlauches ermöglicht wird, ohne hier zusätzlich eine Schrumpfung des Materials durchführen zu müssen.

Das erfindungsgemäße Fluidschlauchunterstützungselement dient nicht nur zur mechanischen Stabilisierung und als Knickschutz für den Fluidschlauch, beispielsweise einer Hydraulik- oder Pneumatikleitung, einen Druckluftschlauch, eine Gas- oder Wasserleitung, sondern bietet eine weitere Unterstützung für den Verwender oder Bediener der entsprechenden Fluidleitung dahingehend, dass durch die Hülse auch eine Markierung des Fluidschlauches durchgeführt wird.

Zu diesem Zweck ist vorgesehen, dass die Hülse eine eingeformte oder eingebettete Markierung aufweist. Diese Markierung kann beispielsweise als den Hülsenumfang überragendes, das heißt optisch und haptisch erfassbares Markierungselement vorgesehen oder beispielsweise aufgrund einer abweichenden Farbgebung in dem Hülsenkörper sichtbar gemacht werden. Daneben besteht die Möglichkeit, dass eine Markierung gegebenenfalls auch aus einem abweichenden Material an der Hülse angeordnet, beispielsweise angeklebt, angeschweißt oder aufvulkanisiert vorliegt. Neben der Einformung oder Einbettung einer Markierung in die Hülse besteht selbstverständlich auch die Möglichkeit, dass eine Markierung dadurch erzeugt wird, dass die Hülse zumindest bereichs- oder abschnittsweise eine individualisierende Farbgebung aufweist. So können beispielsweise für die Ab- und Zuleitungen eines Hydraulikaggregates Hülsen mit verschiedener Farbgebung vorgesehen werden, um hierdurch eine eindeutige Zuordenbarkeit realisieren zu können. Daneben können entsprechende Farbgebungen auch auf beispielsweise herstellerseitig vorgegebene Farbmarkierungen des Hydraulikaggregates abgestimmt werden, sodass hierdurch die korrekte Ankopplung von Maschinenteilen oder Anbaugeräten gewährleistet wird, und eine Zuordnung auf einen Blick erfolgen kann.

Das erfindungsgemäße Fluidschlauchunterstützungselement ist für den Einsatz in einer Vielzahl von Umgebungen geeignet. Aufgrund dessen weist die Hülse bevorzugt eine chemische Beständigkeit gegenüber Säuren, Laugen, Ölen, Fetten und/oder Schmierstoffen auf, sodass hier ein vorzeitiger chemischer Verschleiß des Fluidschlauchunterstützungselementes beim Kontakt mit den vorgenannten Substanzen unterbunden oder zumindest verzögert wird.

Oftmals weisen Fluidschläuche herstellerseitig angeordnete Markierungen auf, die bereits eine gewisse Zuordenbarkeit des Fluidschlauches zu bestimmten Anschlüssen ermöglichen. Soll zur mechanischen Verstärkung der entsprechend ausgerüstete Fluidschlauch dennoch mit einem erfindungsgemäßen Unterstützungselement ausgestattet werden, so wird es als günstig angesehen, wenn die Hülse transparent ausgebildet ist oder zumindest einen transparenten Bereich aufweist, durch den die darunterliegende Schlauchmarkierung sichtbar bleibt. Auch können so beim Anordnen des Unterstützungselementes entsprechende Markierungen, beispielsweise Beschriftungen vor dem Anordnen der Hülse am Schlauch durchgeführt werden, die dann für den Benutzer sichtbar bleiben, da die transparenten Bereiche über dieser Markierung angeordnet werden oder aber die Hülse insgesamt transparent ausgebildet ist. Neben der Anordnung von transparenten Bereichen beziehungsweise der Bildung aus einem transparenten Material besteht selbstverständlich auch die Möglichkeit, die oben genannte Sichtbarkeit unterliegender Informationen zu gewährleisten, indem in der Hülse eine Materialaussparung vorgesehen wird, die über den entsprechenden Informationen beziehungsweise Informationsträgern angeordnet wird und diese ablesbar lässt.

Die Hülse kann in einer weiteren bevorzugten Ausführungsform der Erfindung eine in Längsrichtung ausgerichtete Auftrennung aufweisen. Durch diese Auftrennung kann zum einen erreicht werden, dass die Hülse zum Umschließen beziehungsweise Anordnen an einem Fluidschlauch aufgeklappt werden kann. Zum anderen kann, insbesondere bei vollständiger Durchtrennung der Hülse, diese als zwei- oder mehrteiliges Element, beispielsweise mit zwei oder mehr Schalen zur Verfügung gestellt werden, die dann um den Fluidschlauch gelegt und hernach miteinander verbunden werden. Durch die Auftrennung wird eine zumindest zeitweise Aufweitung des Durchmessers der Hülse erreicht, die das Anordnen beziehungsweise Überziehen über einen Fluidschlauch ermöglicht. Nach dem Anordnen und gegebenenfalls festen Verbinden mit dem Fluidschlauch kehrt die Hülse beziehungsweise der Innendurchmesser der Hülse in die ursprünglich vorgesehen Dimension zurück. Um die Auftrennung wieder zu schließen, beziehungsweise um eine dauerhafte Verbindung der Hülsenhälften oder Teile zu gewährleisten, ist vorgesehen, dass in der Auftrennung Verbindungselemente vorgesehen sind. Diese können nach Art einer Nut- und Federverbindung ausgebildet sein und somit eine Steckverbindung bilden, die nach einer entsprechenden Nachbehandlung der an dem Fluidschlauch angeordneten Hülsen dauerhaft bleibt. Auch besteht hier die Möglichkeit eine Clipsverbindung anzuordnen oder aber zusätzliche Elemente, beispielsweise entsprechende Ringe, über der Hülse anzuordnen und damit die Hülsenteile in ihrer Position entsprechend zu fixieren.

Neben der elastischen Ausgestaltung der Hülse beziehungsweise der Bildung aus einem schrumpffähigen Material, über das dann eine unlösbare Anordnung der Hülse am Fluidschlauch erreicht werden kann, besteht auch die Möglichkeit, die Verbindung zwischen Fluidschlauch und Hülse dadurch zu verbessern, dass auf einer dem Fluidschlauch zugewandten Oberfläche der Hülse, das heißt auf deren innerer Oberfläche wenigstens abschnittsweise eine Klebstoff- oder Hotmelt-Beschichtung vorgesehen ist.

Durch diese Klebstoffbeschichtung wird eine verbesserte Festlegung der Hülse am Fluidschlauch und in der letztendlichen Anordnungsposition erreicht. Nach dem anschließenden Schrumpfen wird die Positionierung weiter verbessert. Handelt es sich bei der Beschichtung um eine sogenannte Hotmelt-Beschichtung, so wird diese im Zuge des durch Temperaturbeaufschlagung durchgeführten Schrumpfungsprozess aktiviert und verklebt dabei die Hülse mit dem Fluidschlauch. Auch wenn die Hülse aus einem nichtschrumpffähigen, beispielsweise elastischen Material gebildet ist, kann durch entsprechende Wärmebeaufschlagung eine Aktivierung der Holtmelt-Beschichtung erreicht werden, ohne dass hier eine Schrumpfung des Materials beabsichtigt ist. Durch die alleinige Erwärmung auf für die Aktivierung der Hotmelt-Beschichtung ausreichende Temperaturen kann dann eine entsprechende Verklebung von Hülse und Fluidschlauch durchgeführt werden, um die Hülse dauerhaft am Fluidschlauch zu fixieren.

Da die Hülse auch als Griffstück oder zur Verbesserung der Handhabbarkeit des Fluidschlauches geeignet ist, erweist es sich als vorteilhaft, wenn die Hülse wenigstens bereichsweise eine rutschfeste Oberflächenstrukturierung oder eine entsprechende Oberflächenveredelung aufweist, um hier ein Abrutschen des Bedieners, auch bei beispielsweise Verschmutzung der Hülse beziehungsweise des Schlauches mit Ölen oder Fetten beziehungsweise Schmierstoffen zu gewährleisten, sodass hier eine sichere und zügige Handhabung des Fluidschlauches, beispielsweise beim An- oder Abkoppeln an ein Antriebsaggregat möglich ist. Die Oberflächenstrukturierung kann beispielsweise nach Art eines Fischgrätmusters, einer Rippung oder Rillung der Hülse ausgebildet werden, bei einer Oberflächenveredelung erfolgt beispielsweise eine chemische Behandlung der Oberfläche, sodass diese insgesamt rutschfest sind.

Von der Erfindung gleichermaßen umfasst ist ein Fluidschlauch mit einer Schlaucharmatur zum Verbinden mit einer Vorrichtung, der dadurch gekennzeichnet ist, dass ein wie vor beschriebenes Fluidschlauchunterstützungselement zur Verstärkung oder Markierung eines Bereichs des Fluidschlauches verwendet wurde und der Fluidschlauch somit ein entsprechendes Fluidschlauchunterstützungselement umfasst. Das Fluidschlauchunterstützungselement ist dabei bevorzugt spielfrei am Fluidschlauch angeordnet. Eine Anordnung am Fluidschlauch erfolgt bevorzugt nachträglich, sodass hier aufwändige Zusatzschritte bei der Herstellung der ursprünglichen Fluidschläuche vermieden werden und dennoch ein in seiner mechanischen Stabilität verbesserter Fluidschlauch zur Verfügung steht. Diese spielfreie Anordnung wird dadurch erreicht, dass das Unterstützungselement beispielsweise auf dem Fluidschlauch aufgeschrumpft oder auf diesem aufgezogen ist. Hierzu ist das Unterstützungselement bevorzugt aus einem elastomeren oder schrumpffähigen Material, inbesondere einem thermoplastischen Kunststoffmaterial gebildet, sodass zum einen durch das elastische Rückverformen des über den Fluidschlauch gezogenen Elementes eine spielfreie Anordnung erreicht werden kann, zum anderen das Unterstützungselement nach dem Anordnen auf dem Fluidschlauch auf diesen aufgeschrumpft wird und somit spielfrei an diesem fixiert ist. Neben den vorgenannten Möglichkeiten der Anordnung des Unterstützungselementes am Fluidschlauch besteht selbstverständlich auch die Möglichkeit, dass das Unterstützungselement mit dem Fluidschlauch verschweißt oder verklebt wird und für letzteres entsprechende Klebstoffbeschichtungen aufweist.

Als günstig wird angesehen, wenn das Fluidschlauchunterstützungselement als in sich formstabile Hülse mit veränderbarem Durchmesser ausgebildet ist, und diese Hülse insbesondere als Spritzgussformteil zur Verfügung gestellt wird. Dies bietet den Vorteil, dass neben der oben genannten Markierung des Fluidschlauches über die Hülse auch eine Verstärkung und beispielsweise insbesondere ein Knickschutz erreicht wird. Die Verwendung eines Spritzgussformteiles stellt zum einen sicher, dass eine gewisse Formstabilität der Hülse gegeben bleibt, auch wenn diese über den Fluidschlauch gezogen oder auf diesen aufgeschrumpft wird, zum anderen wird eine Uniformität des Elementes dadurch erreicht, dass formidentische Spritzgussformteile Verwendung finden. Die Herstellung mit einem Spritzgießverfahren ermöglicht auch die Anpassung der Formgebung der Hülse beziehungsweise des Unterstützungselementes an verschiedene Schlaucharten sowie Schlauchdurchmesser und Schlauchlängen. Auch können bei der Verwendung eines Spritzgussformteiles spezielle Formgebungen des Fluidschlauches beziehungsweise der Armatur, die gegebenenfalls teilweise durch das Unterstützungselement ebenfalls umschlossen wird, berücksichtigt werden. Da das Fluidschlauchunterstützungselement zum einen zur mechanischen Unterstützung des Schlauches beziehungsweise eines Schlauchabschnittes dient und zum anderen als Unterstützung für den Verwender des Schlauches vorgesehen ist, wird es als vorteilhaft angesehen, wenn Mittel zur Markierung am Fluidschlauchunterstützungselement vorgesehen sind. Diese Mittel sind bevorzugt in das Element eingebettet beziehungsweise in dieses eingeformt oder werden durch dieses gehalten. Bei letzterem wird beispielsweise ein Informationsträger am Fluidschlauch angeordnet und das Element weist entsprechende Ausnehmungen oder transparente Bereiche auf, sodass nach dem Anordnen der Informationsträger durch das Unterstützungselement hindurch gelesen werden kann und dabei gleichzeitig durch das Element gehalten wird.

Eine weitere vorteilhafte Ausbildung des Fluidschlauches sieht vor, dass das Fluidschlauchunterstützungselement eine den Fluidschlauch markierende Farbgebung aufweist und somit eine schnelle Zuordnung des entsprechenden Fluidschlauches an die passende Anbindungs- oder Ankopplungsstelle erlaubt. Eine weitere bevorzugte Ausführungsform des Fluidschlauches sieht vor, dass das Unterstützungselement transparent oder mit wenigstens einem transparenten Bereich, Ab- oder Ausschnitt ausgebildet ist, sodass ein Einblick auf am Fluidschlauch angebrachte oder zwischen Fluidschlauch und Fluidschlauchunterstützungselement eingebrachte Information oder Informationsträger gewährleistet ist. Eine weitere Verbesserung der mechanischen Stabilität des erfindungsgemäßen Fluidschlauches ist dadurch sichergestellt, dass das Fluidschlauchunterstützungselement bezüglich der Armatur und dem Fluidschlauch so angeordnet ist, dass die Armatur und der Fluidschlauch teilweise durch das Fluidschlauchunterstützungselement überdeckt sind. Hierdurch wird der sensible Bereich zwischen Armatur und Fluidschlauch weiter verstärkt und verbessert, sodass es zu keiner Beschädigung des Fluidschlauches durch die Armatur, beispielsweise bei zu starkem Abknicken des Fluidschlauches kommen kann. Hierdurch wird die Haltbarkeit des Fluidschlauches erhöht und der Verschleiß gesenkt. Neben der überdeckenden Anordnung besteht selbstverständlich auch die Möglichkeit, dass das Unterstützungselement am fluidschlauchseitigen Ende der Armatur, insbesondere bündig anliegt und hier auch ein Eingreifen der Armatur in den Schlauch, insbesondere beim Abknicken des Schlauches verhindert.

Der erfindungsgemäße Fluidschlauch ist bevorzugt als Hydraulikoder Pneumatikleitung ausgebildet. Daneben besteht selbstverständlich die Möglichkeit, dass der Fluidschlauch als Flüssigkeits-, Gas- oder Druckluftschlauch ausgebildet ist.

Bei modernen Maschinen wird ein maschinenseitig vorgesehenes Antriebsaggregat dazu verwendet, eine Vielzahl von Anbaugeräten zu betreiben. Hierzu werden entsprechende Verteiler zur Verfügung gestellt, die eine Vielzahl von Anschlüssen und Ankopplungspunkten für die verschiedensten Anbaugeräte zur Verfügung stellen. Um den reibungslosen Betrieb des Anbaugerätes zu gewährleisten, ist es hierbei jedoch wichtig, die Ankopplungspunkte genau den jeweiligen Geräten beziehungsweise definierten Gerätefunktionen zuzuordnen. Um bestehende Geräte mit entsprechenden Aggregaten zu verwenden, beziehungsweise um eine möglichst genaue Zuordnung der Leitungen der Anbaugeräte zu den Ankopplungspunkten der Antriebsaggregate sicherzustellen, stellt die Erfindung zusätzlich ein Verstärkungs- und/oder Markierungsset für einen Fluidschlauch beziehungsweise eine Vielzahl von Fluidschläuchen einer Vorrichtung zur Verfügung. Dieses umfasst wenigstens ein Fluidschlauchunterstützungselement, wie vorbeschrieben. Derartige Verstärkungs- und/oder Markierungssets können nachträglich dazu verwendet werden, um bestehende Anbaugeräte entsprechend zu modifizieren und deren Schlauchleitungen dahingehend zu markieren und zu verstärken, dass ein problemloses und schnelles Ankoppeln an die Antriebsaggregate möglich wird. Die Verwendung der vorbeschriebenen Fluidschlauchunterstützungselemente gewährleistet hier eine dauerhafte Markierungsmöglichkeit und verstärkt gleichzeitig den Fluidschlauch, sodass dessen Verschleiß wesentlich verringert wird. Das Verstärkungs- oder Markierungsset kann hierzu beispielsweise zusammen mit entsprechenden Anbaugeräten angeboten werden, sodass hier eine auf das Antriebsaggregat abgestimmte Markierung der Schlauchleitungen durch den Bediener des Anbaugeräten selbstständig und nachträglich durchgeführt werden kann. Auch eignet sich das Verstärkungs- und Markierungsset zum Nachrüsten bestehender Geräte.

Bevorzugt ist das in dem Verstärkungs- und Markierungsset vorgesehene Fluidschlauchunterstützungselement als Hülse ausgebildet, wobei die Hülse als Spritzgussformteil zur Verfügung gestellt ist. Hierdurch kann auf eine Vielzahl verschiedenster Fluidschlauchkonfigurationen reagiert und aufgrund der Verwendung eines Spritzgussformteiles eine stets gleichbleibende Qualität und Formgebung der Hülse sichergestellt werden.

Das Verstärkungs- und Markierungsset weist günstigerweise eine Vielzahl von fluidschlauchspezifisch markierten Fluidschlauchunterstützungselementen auf und kann hierzu anbaugerätabhängig zusammengestellt werden.

Die Unterstützungselemente weisen hierbei beispielsweise eine spezifische, in das Unterstützungselement ein- oder angeformte beziehungsweise eingebettete Markierung auf. Auch besteht die Möglichkeit einer spezifischen Farbgebung, sodass beispielsweise Zuleitungen eines Antriebsaggregates mit einer von den Ableitungen abweichenden Farbe markiert werden und hiernach eine sichere Zuordnung der entsprechenden Schläuche zu den Ankopplungspunkten gewährleistet wird.

Als günstig erweist es sich, wenn das Verstärkungs- und/oder Markierungsset neben den Fluidschlauchunterstützungselementen auch entsprechende Klebe- oder Hilfsmittel zum Anordnung der Unterstützungselemente am Fluidschlauch umfasst. So kann beispielsweise ein entsprechendes Set zusammen mit einem Dehnungswerkzeug beziehungsweise mit einem Klebstoffdispenser oder einer Heißluftvorrichtung angeboten werden, um hier eine schnelle und umfassende Möglichkeit der Anordnung der entsprechenden Fluidschlauchunterstützungselemente durchführen zu können.

In der Zeichnung ist die Erfindung insbesondere in einem Ausführungsbeispiel schematisch dargestellt. Es zeigen:
- Fig. 1a: ein Fluidschlauchunterstützungselement in der Draufsicht,
- Fig. 1b: ein Fluidschlauchunterstützungselement in Schnittdarstellung,
- Fig. 2: einen mit dem erfindungsgemäßen Fluidschlauchunterstützungselement ausgerüsteten Fluidschlauch in perspektivischer Darstellung.

In den Figuren sind gleiche oder einander entsprechende Elemente jeweils mit den gleichen Bezugszeichen bezeichnet und werden daher, sofern nicht zweckmäßig, nicht erneut beschrieben.

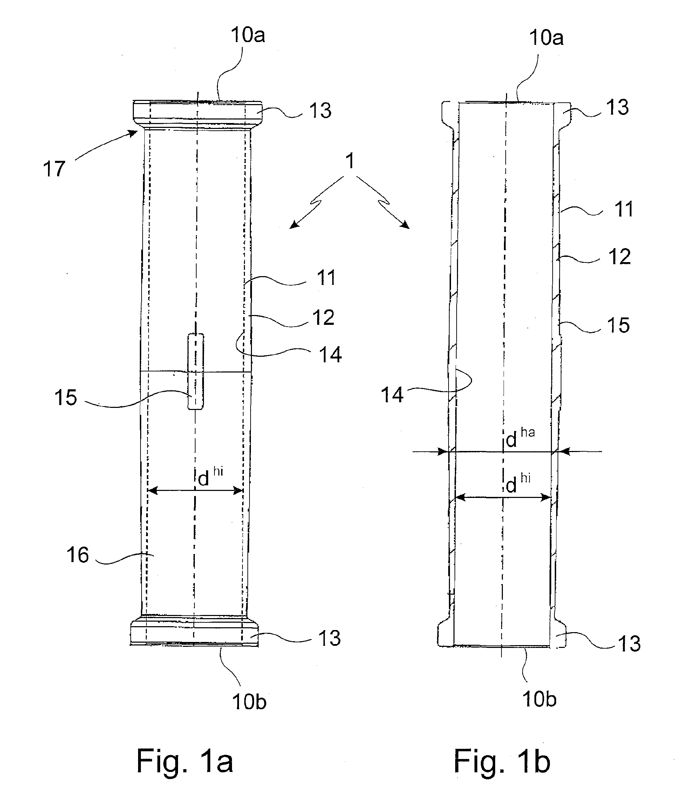

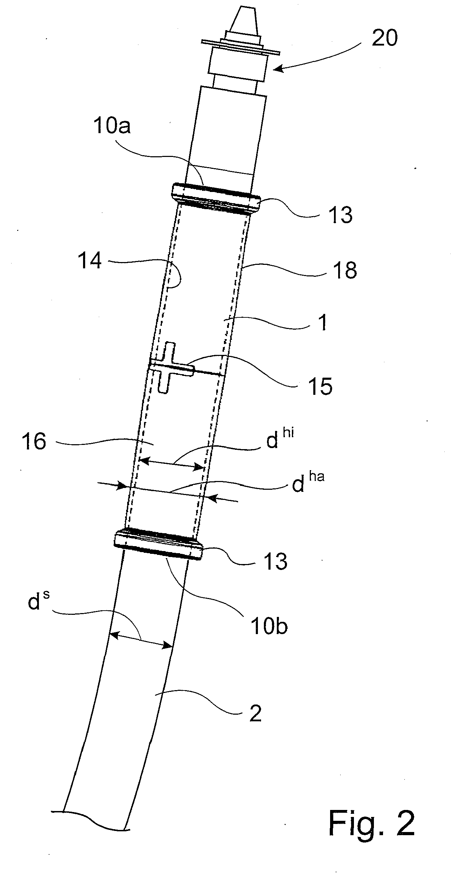

Fig. 1a zeigt ein Fluidschlauchunterstützungselement, das als Hülse 1 ausgebildet ist. Diese Hülse 1 eignet sich zum Überziehen über einen Fluidschlauch 2 (vgl. Fig. 2). Die Hülse 1 der Fig. 1a wird als Spritzgussformteil zur Verfügung gestellt und zeichnet sich durch eine formhaltige Ausführung aus. Der Durchmesser d^{hi} der Hülse 1 ist dabei in Grenzen veränderbar, sodass die Hülse 1 problemlos über einen Fluidschlauch 2 beziehungsweise an eine daran angeordnete Armatur 20 übergezogen werden kann. Die Hülse 1 ist aus einem elastomeren oder thermoplastischen, insbesondere schrumpfbaren Material hergestellt. Dies ermöglicht zwei Arten der Anordnung der Hülse 1 auf einem Fluidschlauch 2. Zum einen, insbesondere bei elastischer Ausführung weist die Hülse in ihrer nichtverwendeten Ausführung einen Durchmesser d^{hi} auf, der im Wesentlichen dem Außendurchmesser d^{s} des Fluidschlauches 2 entspricht. Zum Anordnen wird die Hülse 1 dann unter Zuhilfenahme von entsprechenden Werkzeugen oder durch den Verwender soweit aufgeweitet, dass ein Überziehen über die Armatur 20 beziehungsweise den Fluidschlauch 2 möglich wird. Durch diese elastische Verformung der Hülse 1 wird diese aufgeweitet, kehrt jedoch dann, da die Verformung reversibel ist, nach dem Abschluss des Überziehens über den Fluidschlauch 2 in ihre Ausgangsform zurück und weist hernach ihren Ausgangsdurchmesser d^{hi} wieder auf. Aufgrund der Abstimmung des Innendurchmessers d^{hi} der Hülse 1 auf den Außendurchmesser d^{s} des Fluidschlauches 2 ist diese jedoch spielfrei oder im Wesentlichen spielfrei auf dem Fluidschlauch 2 angeordnet. Bis auf die Aufweitungswerkzeuge (nicht dargestellt) sind hier dann keine weiteren Hilfsmittel notwendig, um einen Fluidschlauch 2 mit dem erfindungsgemäßen Fluidschlauchunterstützungselement auszurüsten. Eine weitere Möglichkeit der Anordnung der Hülse 1 am Fluidschlauch 2 sieht vor, dass deren Innendurchmesser d^{hi} zunächst größer gewählt ist als der Außendurchmesser d^{s} des Fluidschlauches 2 beziehungsweise einer gegebenenfalls am Fluidschlauch 2 angeordneten Armatur 20. Die Hülse 1 wird hierbei dann auf den Fluidschlauch 2 aufgesteckt und anschließend, da aus einem entsprechenden Material hergestellt, auf den Fluidschlauch 2 beziehungsweise auf die Armatur 20 oder Armaturteile aufgeschrumpft.

Die Hülse 1 dient somit zum Verstärken des Fluidschlauches 2 im Bereich der Armatur 20. Dieser Bereich stellt gleichzeitig den Bereich dar, der beim Ab- oder Ankoppeln des Fluidschlauches 2 an ein beispielsweise Antriebsaggregat ergriffen wird, um den Fluidschlauch 2 dann von entsprechenden Abkopplungspunkten (nicht dargestellt) abzuziehen. Dieser Bereich ist dabei dann einer erhöhten Zug- beziehungsweise Druckbelastung ausgesetzt und weist somit in der Regel einen erhöhten Verschleiß auf. Durch das Anordnen des erfindungsgemäßen Fluidschlauchunterstützungselementes und hierbei insbesondere der dieses Element bildenen Hülse 1 kann somit eine mechanische Verstärkung dieses hochbeanspruchten Bereiches durchgeführt werden. Dadurch, dass die Hülse 1 nachträglich an Schläuchen anbringbar ist, können auch bereits vorhandene Systeme mit der Hülse 1 nachgerüstet und die Fluidschläuche 2 somit mechanisch verstärkt werden. Neben dieser mechanischen Verstärkung bietet die Hülse 1 auch die Möglichkeit den damit ausgerüsteten Fluidschlauch 2 zu markieren. Im Ausführungsbeispiel der Fig. 1a weist die Hülse 1 hierzu eine Markierung 15 auf, die in den Hülsenkörper 11 teilweise eingebettet ist und bereichsweise den Umfang des Hülsenkörpers 11 überragt, somit neben einer optischen auch eine kaptische Erkennbarkeit der Markierung 15 gegeben ist. Die Markierung 15 ist im Ausführungsbeispiel der Fig. 1a als koaxial im Hülsenkörper 11 angeordneter Vorsprung oder als "Minus-Zeichen" ausgebildet. Daneben besteht beispielsweise auch die Möglichkeit die Markierung 15 als "Plus-Zeichen" auszubilden. So können Zu- und Ableitungen eines Anbaugerätes entsprechend markiert werden. Die Markierung 15 kann auch als Pfeil, Kreis oder jedes sonstigen geeignet erscheinendes Symbol ausgeführt sein und sich insbesondere auf korrespondierende Markierungen an den Ankopplungspunkten beziehungsweise dem Antriebsaggregat abstimmen. Neben einer gegenüber dem Hülsenkörper 11 erhabenen Ausbildung der Markierung 15, kann diese selbstverständlich eine vom Hülsenkörper 11 abweichende Farbgebung aufweisen und somit auch optisch auf einen Blick erkennbar gemacht werden. Während im Ausführungsbeispiel der Fig. 1a, ebenso wie im Ausführungsbeispiel der Fig. 1b nur eine einzige Markierung 15 am Hülsenkörper 11 vorgesehen ist, können entsprechene Markierungen 15 auch umlaufend am Hülsenkörper 11 oder an mehreren Punkten der Oberfläche 16 des Hülsenkörpers 11 angeordnet werden, sodass die Markierung 15 von allen Seiten her gut erkennbar ist.

Die Hülse 1 bildet nicht nur eine mechanische Verstärkung des Fluidschlauches 2 sowie dessen Markierung, sondern auch ein Griffstück aus. Um hier eine Begrenzung zu schaffen, weist die Hülse 1 an ihrem oberen und an ihrem unteren Ende 10a, b einen Wulst 13 auf. Dieser Wulst 13 wird bereits beim Herstellen der Hülse 1 in einem Spritzgießverfahren an dieser angeformt und verändert auch beim Anordnen der Hülse 1 an einem Fluidschlauch 2 seine Form nicht, bleibt somit stets als gegenüber dem Hülsenkörper 11 vorspringendes Element erhalten und bietet, beispielsweise beim Ergreifen der Hülse 1 durch einen Bediener, einen Anschlag für dessen Hand. Der Wulst 13 kann auch als sich radial vom Umfang 17 der Hülse 1 wegerstreckender Flansch ausgebildet werden und bietet somit zusätzlich einen gewissen Schutz beim Handhaben des Fluidschlauches 2, beispielsweise gegenüber austretenden Flüssigkeiten oder dergleichen. Der Wulst 13 ist im Ausführungsbeispiel der Fig. 1a, b in beziehungsweise an der Hülse 1 angeformt oder eingeformt vorgesehen.

Neben dieser hier dargestellten Ausführungsform besteht auch die Möglichkeit, dass der Wulst 13, der auch als Ring oder Flansch ausgebildet sein kann, als zusätzliches, vom eigentlichen Hülsenkörper 11 gesondert vorgesehenes Element zur Verfügung gestellt wird. Dies eröffnet die Möglichkeit, dass beispielsweise der Wulst 13 aus einem elastischen oder thermoplastischen, insbesondere schrumpffähigen Material gebildet, während die Hülse 1 aus einem hiervon abweichenden Material gefertigt ist. Beim Anordnen der Hülse 1 auf einem Fluidschlauch 2 wird somit zuerst der am unteren Ende 10b vorgesehene Ring beziehungsweise Wulst 13 an dem Fluidschlauch 2 angeordnet, hernach der eigentliche Hülsenkörper 11 auf den Fluidschlauch 2 aufgeschoben und danach der am oberen Ende 10a der Hülse 1 vorgesehene Wulst 13 beziehungweise Ring am Fluidschlauch 2 angebracht. Die am oberen und unteren Ende 10a, b vorgesehene Wulste 13 beziehungsweise Ringe halten dann den Hülsenkörper 11 in seiner Position am Fluidschlauch 2. Neben der dargestellten Ausführungsform mit einer Wulst 13 an beiden Hülsenenden besteht auch die Möglichkeit, hier jeweils eine Serie von mehreren Wülsten anzubringen, die die Griffigkeit der Hülse verbessern und zusätzliche Markierungsfunktion aufweisen können.

Fig. 1b zeigt die Hülse 1 der Fig. 1a in geschnittener Darstellung. Deutlich erkennbar ist hierbei die sich in Längsrichtung der Hülse 1 verändernde Wandstärke der Hülse 1. Diese nimmt zur Mitte des Hülsenkörpers 11 hin zu und bildet hier einen zusätzlich verdickten Bereich, in dem die Markierung 15, die gegenüber dem Hülsenkörper 11 vorspringt, vorgesehen ist. Die Markierung 15 ist im Ausführungsbeispiel der Fig. 1b in den Hülsenkörper 11 eingeformt, ist somit aus dem gleichen Material und in der gleichen Farbe ausgeführt, wie der Hülsenkörper 11. Neben dieser Ausgestaltung der Hülse 1 besteht selbstverständlich die Möglichkeit, dass die Markierung 15 eine abweichende Farbgebung aufweist und so optisch am Hülsenkörper 11 gut erkennbar in Erscheinung tritt.

Während der Außendurchmesser d^{ha} der Hülse 1 variabel ist, ist der Innendurchmesser der Hülse d^{hi} über die gesamte Länge des Hülsenkörpers 11 im Wesentlichen gleich. Aufgrund einer elastischen oder thermoplastischen Ausführung der Hülse 1 ist der Innendurchmesser der Hülse d^{hi} insgesamt jedoch veränderlich, das heißt zum Aufziehen der Hülse 1 auf einen Fluidschlauch 2 kann der Innendurchmesser d^{hi} erhöht werden, was durch Aufweiten der Hülse 1 erfolgt. Darüberhinaus kann der Innendurchmesser der Hülse d^{hi} durch Schrumpfen nach dem Anordnen der Hülse 1 auf einem Fluidschlauch 2 verändert, nämlich verringert werden, um ein spielfreies Anliegen der Hülse 1 am Fluidschlauch 2 sicherzustellen. Im Übrigen bleibt bei allen Verwendungen der Hülse 1 beziehungsweise unabhängig von der gewählten Methode zum Anordnen der Hülse 1 auf einem Fluidschlauch 2 die Formgebung der Hülse gleich. Aufgrund der Ausführung der Hülse 1 als Formteil, das in einem Spritzgussverfahren hergestellt wird, sind die Wulste 13 am oberen und unteren Ende 10a, b der Hülse 1 in den Hülsenkörper 11 eingeformt beziehungsweise stellen einen Teil des Hülsenkörpers 11 dar. Die Wulste 13 erstrecken sich radial vom Hülsenkörper 11 nach Außen. Neben dieser Ausführungform bestünde generell auch die Möglichkeit, dass sich der Wulst 13 beziehungsweise Teile davon zum Hülseninneren erstrecken und beim Anordnen der Hülse 1 auf einem Formschlauch 2 in dort vorgesehene Ausnehmungen, Vertiefungen oder Nuten eingreifen.

Um die Verbindung zwischen Hülse 1 und Fluidschlauch 2 weiter zu verbessern, besteht die Möglichkeit auf der Innenwand 14 der Hülse 1 eine Klebebeschichtung aufzubringen, die neben dem mechanischen Festhalten bei elastischer Ausführung beziehungsweise nach dem Schrumpfen zusätzlich die Verbindung zwischen Fluidschlauch 2 und Hülse 1 verbessert und die Hülse dauerhaft in ihrer Position fixiert.

Um eine noch bessere Handhabbarkeit der Hülse zu erreichen, kann deren äußere Oberfläche 16 mit einer Strukturierung oder Beschichtung versehen werden, die die Hülse 1 rutschfest macht.

Fig. 2 zeigt einen Fluidschlauch 2, der eine Armatur 20 aufweist und nachträglich mit einer Hülse 1 ausgerüstet wurde. Der Innendurchmesser d^{hi} der Hülse 1 entspricht dabei dem Außendurchmesser d^{s} des Schlauches, sodass die Hülse 1 spielfrei am Fluidschlauch 2 angeordnet ist. Die Hülse 1 weist im Ausführungsbeispiel der Fig. 2 ebenfalls eine Markierung 15, in Form eines "Plus-Zeichens" auf und charakterisiert somit eindeutig den Fluidschlauch 2. Über die Markierung 15 kann dieser somit dem entsprechenden Anordnungs- beziehungsweise Ankopplungspunkt an einem Antriebsaggregat zugeordnet werden und ermöglicht ein schnelles und vor allem korrektes Anbringen des Fluidschlauches 2. Die am oberen und unteren Ende 10a, b der Hülse 1 vorgesehenen Wulste 13 gestalten die Hülse 1 nach Art eines Griffstückes aus, sodass hier ein Ankoppeln des Fluidschlauches 2 an ein Antriebsaggregat (nicht dargestellt) wesentlich vereinfacht wird, da der Fluidschlauch 2 optimal an der Hülse 1 ergriffen werden kann und die vorspringenden Wulste 13 ein Abrutschen der Hand des Bedieners verhindern. Die Innenseite 14 der Hülse 1 liegt formschlüssig am Fluidschlauch 2 an, wodurch ein Verrutschen der Hülse 1 am Fluidschlauch 2 verhindert wird. Zusätzlich könnte hier eine Klebebeschichtung oder Hotmelt-Beschichtung vorgesehen werden, die im Zuge der Schrumpfung der Hülse 1, die notwendig ist, um diese am Fluidschlauch 2 anzuordnen, aktiviert wird und die Verbindung zwischen Fluidschlauch 2 und Hülse 1 weiter verbessert.

Neben den beiden Wulsten, die die Handhabbarkeit des Fluidschlauches signifikant verbessern, weist die Hülse 1 im Ausführungsbeispiel der Fig. 2 auf ihrer äußeren Oberfläche 16 eine zusätzliche Strukturierung 18 auf, die nach Art eines Fischgrätmusters oder einer Riffelung oder Rippung ausgebildet ist. Die Hülse 1 ist im Ausführungsbeispiel der Fig. 2 nicht als gleichmäßig zylindrischer Körper ausgebildet, sondern weist eine sich über den Verlauf der Hülsenlänge verändernde Wandstärke auf. Demgegenüber verändert sich der Innendurchmesser d^{hi} der Hülse 1 nicht, sondern bildet einen zylindrischen Innenraum der Hülse 1 aus, der mit der zylindrischen Ausführung des Fluidschlauches 2 korrespondiert.

Die Form der Hülse 1 bleibt nicht auf eine zylindrische oder im Wesentlichen zylindrische Ausformung beschränkt, sondern kann jeweils insbesondere hinsichtlich der Formgebung des Innendurchmessers auf die Außenform des Fluidschlauches 2 abgestimmt und dabei oval, mehreckig, rechteckig oder dergleichen ausgebildet werden.

Vor dem Anordnen der Hülse 1 auf dem Fluidschlauch 2 weist diese einen Innendurchmesser d^{hi} auf, der größer ist als der Außendurchmesser d^{s} des Fluidschlauches 2 beziehungsweise der Armatur 20. Hierdurch kann die Hülse 1 problemlos über den Fluidschlauch 2 beziehungsweise die Armatur 20 gesteckt werden, um hernach in einem Schrumpfverfahren, das beispielsweise durch thermische oder chemische Beaufschlagung der Hülse 1 durchgeführt wird, soweit geschrumpft zu werden, dass der Innendurchmesser d^{hi} der Hülse 1 dem Außendurchmesser d^{s} des Fluidschlauches 2 entspricht.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Fluidschlauchunterstützungselement, gebildet aus einer den Fluidschlauch umschließenden, in sich formhaltigen Hülse mit veränderbarem Durchmesser, wobei die Hülse (1) als Spritzgussformteil ausgebildet ist.

2. Fluidschlauchunterstützungselement nach Anspruch 1 **dadurch gekennzeichnet, dass** die Hülse (1) nachträglich am Fluidschlauch (2), insbesondere zur mechanischen Aussteifung und/oder Markierung, anbringbar ist.

3. Fluidschlauchunterstützungselement nach einem oder mehreren der vorhergehenden Ansprüche, **dadurch gekennzeichnet, dass** die Hülse (1) eine Wandstärke von mindestens 0,1 mm, insbesondere zwischen 0,2 mm und 10 mm, bevorzugt zwischen 1 mm und 8 mm, insbesondere zwischen 2 mm und 5 mm, aufweist und/oder der Hülse (1) an wenigstens einem Ende eine den Umfang zumindest abschnittsweise umlaufende, an der Hülse (1) angeformte oder davon getrennte wulstartige Verdickung (13), als Ring und/oder ein Flansch zugeordnet ist.

4. Fluidschlauchunterstützungselement nach Anspruch 1 bis 4, **dadurch gekennzeichnet, dass** die Hülse (1) aus einem elastomeren und/oder thermoplastischen, insbesondere schrumpffähigen Kunststoffmaterial, bevorzugt auf Polyolefin- oder Fluorelastomerbasis, aus Polyvinylidenfluorid (PVDF), Polyvinylchlorid (PVC), Polytetrafluorethen (PTFE), Perfluoralkoxy-Polymer (PFA) oder Mischungen daraus, gebildet ist und/oder elastische und/oder thermoplastische, insbesondere schrumpffähige Bereich aufweist.

5. Fluidschlauchunterstützungselement nach einem oder mehreren der vorhergehenden Ansprüche, **dadurch gekennzeichnet, dass** die Hülse (1) eine Schrumpfrate von zwischen 6:1 und 1,1:1, insbesondere zwischen 3:1 und 1,5:1 und einen Innendurchmesser, der vor einer Schrumpfung größer als der Außendurchmesser des Fluidschlauches (2) und/oder einer am Fluidschlauch (2) vorgesehenen Armatur (20) ist, aufweist.

6. Fluidschlauchunterstützungselement nach einem oder mehreren der vorhergehenden Ansprüche, **dadurch gekennzeichnet, dass** die Hülse (1) einen Innendurchmesser (d^{hi}) aufweist, der kleiner oder gleich dem Außendurchmesser (d^{s}) des Fluidschlauches (2) und/oder einer am Fluidschlauch (2) vorgesehenen Armatur (20) ist, wobei die Hülse (1) spielfrei am Fluidschlauch (2) anordenbar, insbesondere überziehbar, ist insbesondere wobei die Hülse (1) eine eingeformte und/oder eingebettete Markierung (15) und/oder zumindest bereichs- oder abschnittsweise eine individualisierende Farbgebung aufweist und/oder die Hülse (1) transparent ausgebildet ist oder wenigstens einen transparenten Bereich und/oder wenigstens eine Materialaussparung aufweist, insbesondere wobei die Hülse (1) eine chemische Beständigkeit gegenüber Säuren, Laugen, Ölen, Fetten und Schmierstoffen aufweist und/oder die Hülse (1) in Längsrichtung wenigstens eine Auftrennung aufweist, insbesondere wobei in der Auftrennung Verbindungsmittel, insbesondere nach Art einer Nut- und Federverbindung oder einer Clipsverbindung, vorgesehen sind und/oder auf einer dem Fluidschlauch (2) zugewandten Oberflächen beziehungsweise Innenseite (14) der Hülse (1) wenigstens abschnittsweise eine Klebstoff- oder Hotmelt-Beschichtung vorgesehen ist, bevorzugt wobei die Hülse (1) wenigstens bereichsweise eine rutschfeste Oberflächenstrukturierung und/oder -veredlung aufweist.

7. Fluidschlauch mit einer Schlaucharmatur zum Verbinden mit einer Vorrichtung, **gekennzeichnet durch** einen **durch** ein Fluidschlauchunterstützungselement gemäß Anspruch 1 bis 6 verstärkten und/oder markierten Bereich, insbesondere wobei das Fluidschlauchunterstützungselement an dem Fluidschlauch (2) spielfrei angeordnet, insbesondere auf diesen aufgeschrumpft oder aufgezogen und/oder mit diesem verschweißt oder verklebt ist und/oder das Fluidschlauchunterstützungselement als in sich stabile Hülse (1) mit veränderbarem Durchmesser ausgebildet ist, wobei die Hülse (1) insbesondere als Spritzgussformteil ausgebildet ist.

8. Fluidschlauch nach Anspruch 7, **dadurch gekennzeichnet, dass** das Fluidschlauchunterstützungselement ein Mittel zur Markierung (15) aufweist, wobei das Mittel in das Fluidschlauchunterstützungselement eingebettet, in dieses eingeformt ist oder durch dieses gehalten wird und/oder das Fluidschlauchunterstützungselement eine den Fluidschlauch (2) markierende Farbgebung aufweist und/oder das Fluidschlauchunterstützungselement transparent oder mit wenigstens einem transparenten Bereich, Ab- oder Ausschnitt ausgebildet ist, insbesondere wobei der transparente Bereich, Ab- oder Ausschnitt Einblick auf am Fluidschlauch (2) angebrachte oder zwischen Fluidschlauch (2) und Fluidschlauchunterstützungselement eingebrachte Informationen oder Informationsträger gewährt.

9. Fluidschlauch nach Anspruch 7 oder 8, **dadurch gekennzeichnet, dass** das Fluidschlauchunterstützungselement aus einem elastomeren und/oder schrumpffähigen Material, insbesondere einem thermoplastischen Kunststoffmaterial gebildet ist.

10. Fluidschlauch nach einem der Ansprüche 7 bis 9 **dadurch gekennzeichnet, dass** das Fluidschlauchunterstützungselement bezüglich der Armatur (20) und dem Fluidschlauch (2) so angeordnet ist, dass die Armatur (20) und der Fluidschlauch (2) teilweise durch das Fluidschlauchunterstützungselement überdeckt sind oder das Fluidschlauchunterstützungselement am fluidschlauchseitigen Ende der Armatur (20) insbesondere bündig anliegt.

11. Fluidschlauch nach einem oder Ansprüche 7 bis 10, **dadurch gekennzeichnet, dass** der Fluidschlauch (2) als Hydraulikoder Pneumatikleitung, Flüssigkeits-, Gas- oder Druckluftschlauch ausgebildet ist.

12. Verstärkungs- und/oder Markierungsset für einen Fluidschlauch (2) beziehungsweise eine Vielzahl von Fluidschläuchen (2) einer Vorrichtung, umfassend wenigstens ein Fluidschlauchunterstützungselement gemäß einem der Ansprüche 1 bis 6.

13. Verstärkungs- und/oder Markierungsset nach Anspruch 12, **dadurch gekennzeichnet, dass** das Fluidschlauchunterstützungselement als Hülse (1) ausgebildet und die Hülse (1) als Spritzgussformteil zur Verfügung gestellt ist.

14. Verstärkungs- und/oder Markierungsset nach Anspruch 12 oder 13, **dadurch gekennzeichnet, dass** das Verstärkungsund Markierungsset eine Vielzahl von fluidschlauchspezifisch markierten Fluidschlauchunterstützungselementen umfasst, insbesondere wobei das Fluidschlauchunterstützungselement beziehungsweise die Fluidschlauchunterstützungselemente jeweils wenigstens eine ein- oder angeformte und/oder eingebettete Markierung (15) oder eine spezifische Farbgebung aufweisen.

15. Verstärkungs- und/oder Markierungsset nach einem der Ansprüche 12 bis 14, weiterhin umfassend Klebe- und/oder Hilfsmittel zum Anordnen des Fluidschlauchunterstützungselementes am Fluidschlauch (2).
